# EUROPEAN PATENT APPLICATION

(11) **EP 4 687 272 A1**
(43) Date of publication of application: **04.02.2026**
(21) Application number: 24192274.9
(22) Date of filing: 01.08.2024
(51) Int. Cl.: H02M 1/00, H02M 1/14, H02M 7/483, H02M 7/487

(54) **ASYMMETRIC BI-DIRECTIONAL RECTIFIER ARCHITECTURE WITH LEG RECONFIGURATION FOR MULTI-PHASE OPERATION**

(71) Applicant: Infineon Technologies Austria AG, 9500 Villach (AT)
(72) Inventor: PEVERE, Alessandro, 9500 Villach (AT); PACINI, Alex, 9500 Villach (AT); KASPER, Matthias Joachim, 9500 Villach (AT)
(74) Representative: 2SPL Patentanwälte PartG mbB

(57) **Abstract**

Provided is an apparatus (100) comprising a rectifier stage (110) having a neutral line (N) and configured to convert between an AC signal and a DC signal. The rectifier stage (110) comprises at least one rectifier leg (112A) with neutral-point connected topology and at least one rectifier leg (112C) with flying capacitor topology. A reconfiguration switch (130) is configured to switch between single-phase and three-phase operation of the rectifier stage (110).

## Description

### Field

The present disclosure generally relates to apparatuses with rectifiers/inverters, such as power converters, and, more particularly, to multi-phase power converters.

### Background

Power converters have long been used to convert a respective input voltage into an output voltage to power a corresponding load. In certain instances, the input voltage is an alternating voltage while the output voltage is a direct current (DC) voltage. It is typically desirable to produce the respective output voltage to have a low ripple component. Otherwise, corresponding load circuitry powered by the DC voltage may not operate correctly.

Single-phase operation of power converters involves using one alternating current (AC) input voltage to produce a DC output voltage. This is simpler and commonly used in residential and light commercial applications. However, single-phase converters can experience higher current ripple, which requires effective filtering to ensure a stable DC output. Ripple can cause inefficient operation and potential damage to the load circuitry.

Three-phase operation uses three AC input voltages, which are out of phase (e.g., by 120°) with each other. This setup is more efficient and provides a smoother DC output with less ripple. Three-phase converters may be used in industrial and high-power applications due to their ability to handle larger loads more effectively. However, the complexity of three-phase systems is higher, requiring more sophisticated control and synchronization mechanisms.

One challenge in both single-phase and three-phase operation is managing the ripple in the DC output to ensure stable and reliable performance of the powered load. In single-phase systems, the ripple is more pronounced and may require robust filtering solutions. In three-phase systems, while the ripple is less, the complexity of managing three-phase inputs and ensuring balanced operation adds to the design and control challenges. Another challenge is ensuring efficiency and minimizing losses during the conversion process.

Thus, there may be a demand for (multi-phase) power converters with low ripple in the DC output, in particular during single-phase operation.

### Summary

This demand is addressed by apparatuses and methods in accordance with the appended claims.

According to a first aspect, the present disclosure proposes an apparatus (e.g., power converter) comprising a rectifier stage having a neutral line and configured to convert between an AC signal and a DC signal. The rectifier stage may be bidirectional, meaning that the rectifier stage may be capable of operating in both directions, i.e., it can convert an AC signal to a DC signal (rectifier mode) and also convert a DC signal to an AC signal (inverter mode). The rectifier stage comprises at least one rectifier leg with neutral-point connected topology, meaning that the rectifier leg is directly or indirectly coupled to the neutral line. For example, the rectifier stage may comprise a first rectifier leg with neutral-point connected topology and a second rectifier leg with neutral-point connected topology. The rectifier stage further comprises at least one rectifier leg with flying capacitor topology. In this context, a flying capacitor topology refers to a circuit design where capacitors are used in a dynamic manner to balance and distribute voltage levels. For example, the rectifier stage may, next to the first and second rectifier legs, comprise a third rectifier leg with flying capacitor topology. This configuration may be referred to as an "asymmetric rectifier." The term "asymmetric rectifier" implies that the rectifier stage is composed of different types of rectifier legs, each with distinct topologies and functionalities. In this case, the rectifier stage comprises at least one rectifier leg with neutral-point connected topology (coupled to the neutral line) and at least one rectifier leg with flying capacitor topology. The use of different topologies within the same rectifier stage introduces asymmetry. The rectifier stage further comprises a reconfiguration switch configured to switch between single-phase and three-phase operation of the rectifier stage, thus enabling operation with different types of AC grids. The reconfiguration switch may allow the rectifier to adapt to different types of power supply systems, enabling it to function efficiently with both single-phase and three-phase electrical inputs/outputs.

In some embodiments, the rectifier leg with flying capacitor topology is configured as a two-level half-bridge circuit or three-level flying capacitor half-bridge circuit. A "two-level" circuit typically has two distinct voltage levels (e.g., 0 and V_{DD}). A "three-level" circuit has three distinct voltage levels (e.g., 0, V_{DD}/2, and V_{DD}), which may help to reduce voltage stress and improve efficiency. A "half-bridge circuit" refers to a configuration which may use two or more switches (such as transistors or MOSFETs) connected in series across a power supply.

In some embodiments, the rectifier leg with neutral-point connected topology comprises one of a T-type half-bridge circuit, a neutral point clamped (NPC) half-bridge circuit, or an active neutral point clamped (ANPC) half-bridge circuit. A T-type circuit is a variation of a standard half-bridge topology that includes an additional switch connected to the midpoint, forming a 'T' shape. This configuration may help to balance voltages and improve efficiency by reducing switching losses and voltage stress on the components. An NPC circuit includes diodes that clamp the neutral point to intermediate voltage levels, allowing the circuit to handle multiple voltage levels. This topology may help to divide the voltage stress across multiple components, improving reliability and efficiency. It may be used in multi-level inverters to achieve higher voltage levels with lower individual device stress. An ANPC circuit is an advanced version of the NPC topology where active switches (transistors) are used instead of diodes to clamp the neutral point. This active control may allow for better efficiency and performance by reducing switching losses and providing more precise control over the voltage levels.

In some embodiments, the apparatus further comprises a control circuit which is configured to control a switching frequency and duty cycle of switches of the rectifier legs. The control circuit is configured to, during three-phase operation, control the switching frequency of switches of the rectifier legs (with neutral-point connected topology and with flying capacitor topology) to be the same. During single-phase operation, the control circuit is configured to control the switching frequency of switches of the rectifier leg with flying capacitor topology to be different from switches of the rectifier leg with neutral-point connected topology. Thus, the apparatus may include a control circuit that manages the switching frequency and duty cycle of the rectifier leg switches. During three-phase operation, the control circuit may ensure that the switching frequency of all rectifier leg switches, regardless of their topology (neutral-point connected or flying capacitor), is the same. However, during single-phase operation, the control circuit may set different (e.g., higher) switching frequencies for the switches in the flying capacitor topology compared to those in the neutral-point connected topology. This may allow for optimized performance in both single-phase and three-phase operations, enhancing efficiency and flexibility in handling different power supply systems.

In some embodiments, the control circuit is configured to control the switching frequency of switches of the rectifier leg with flying capacitor topology to be in a range of 40 - 100 kHz during single-phase operation. This means that when operating with a single-phase power supply, the switches in this specific rectifier leg may switch on and off at frequencies within this range. An advantage of this configuration may be that it allows for efficient power conversion and reduced electromagnetic interference, optimizing the performance of the rectifier stage in single-phase operation.

In some embodiments, the reconfiguration switch is configured to, during three-phase operation, configure the rectifier legs for inverter/rectifier operation. The at least one rectifier leg with neutral-point connected topology connects to the neutral line, and the rectifier leg with flying capacitor topology does not connect to the neutral line during three-phase operation. During single-phase operation, the reconfiguration switch may configure the rectifier leg with neutral-point connected topology for inverter/rectifier operation and configure the rectifier leg with flying capacitor topology to connect to the neutral line causing the rectifier leg with flying capacitor topology to function as a voltage balancer. Thus, the reconfiguration switch may be designed to set up the rectifier legs differently depending on whether the system is in three-phase or single-phase operation. In three-phase operation, the rectifier legs are arranged for both inverter/rectifier functions, with the rectifier leg using neutral-point connected topology linking to the neutral line, while the leg with flying capacitor topology does not. In single-phase operation, the reconfiguration switch may adjust the setup so that the neutral-point connected rectifier leg continues to handle inverter/rectifier tasks, and the flying capacitor topology leg connects to the neutral line, making it work as a voltage balancer. This setup may improve the system's flexibility and efficiency, ensuring optimal performance and voltage stability (reduced voltage ripple) in both single-phase and three-phase operations.

In some embodiments, the rectifier stage comprises a first output node and a second output node for the DC signal. The apparatus may further comprise a DC stage coupled to the rectifier stage. The DC stage is a part of an electrical circuit or system that processes, filters, stores, or converts direct current (DC) power. In the context of power electronics, a DC stage may include components like capacitors, inductors, and DC-DC converters. These components may work together to stabilize, smooth, and manage the DC voltage and current that has been rectified from an AC source. The DC stage may comprise a first capacitor and a second capacitor connected in series between the first and the second output node. The reconfiguration switch may be configured to, during single-phase operation, connect the rectifier leg with flying capacitor topology to a mid-point of the first and second capacitor. During three-phase operation, the reconfiguration switch is configured to disconnect the rectifier leg with flying capacitor topology from the mid-point of the first and second capacitor. Thus, the rectifier stage may have two output nodes for the DC signal. It may connect to a DC stage, which includes two capacitors in series between these output nodes. The reconfiguration switch connects the rectifier leg with flying capacitor topology to the midpoint of these capacitors during single-phase operation and disconnects it during three-phase operation. This setup may allow the flying capacitor topology leg to help balance the voltage during single-phase operation, improving voltage stability and performance.

In some embodiments, the rectifier stage comprises a first rectifier leg with neutral-point connected topology, a second rectifier leg with neutral-point connected topology, a third rectifier leg with flying capacitor topology, a first output node and a second output node for the DC signal. The first rectifier leg comprises a first switch and a second switch connected in series between the first and the second output node, wherein a mid-point of the first and second switch of the first rectifier leg is coupled to a neutral line during single- and three-phase operation. The second rectifier leg comprises a third switch and a fourth switch connected in series between the first and the second output node, wherein a mid-point of the third and fourth switch of the second rectifier leg is coupled to the neutral line during single- and three-phase operation. The third rectifier leg comprises a fifth, sixth, seventh, and eighth switch connected in series between the first and the second output node, wherein a mid-point of the fifth and sixth switch of the third rectifier leg is coupled to a mid-point of the seventh and eighth switch of the third rectifier leg via a flying capacitor. A mid-point of the sixth and seventh switch of the third rectifier leg is coupled to the neutral line during single-phase operation. Thus, the rectifier stage may include three rectifier legs: the first and second legs use neutral-point connected topology, while the third uses flying capacitor topology. Each leg has switches arranged in series between the first and second output nodes for the DC signal. In the first rectifier leg, the midpoint between the first and second switches connects to the neutral line during both single- and three-phase operation. Similarly, in the second rectifier leg, the midpoint between the third and fourth switches connects to the neutral line during both operations. In the third rectifier leg, the fifth, sixth, seventh, and eighth switches are connected in series, with a flying capacitor linking the midpoint of the fifth and sixth switches to the midpoint of the seventh and eighth switches. During single-phase operation, the midpoint between the sixth and seventh switches connects to the neutral line. An advantage of this setup is that it may allow for effective voltage balancing and improved performance during single-phase operation, while also maintaining efficient operation during three-phase operation. This enhances the overall flexibility and efficiency of the rectifier stage.

In some embodiments, the mid-point of the first and second switch of the first rectifier leg is coupled to the neutral line via a first bidirectional switch (T-type circuit configuration). The mid-point of the third and fourth switch of the second rectifier leg is coupled to the neutral line via a second bidirectional switch (T-type circuit configuration). In other embodiments, first and second rectifier legs may be configured as a Neutral Point Clamped (NPC) topology. In yet other embodiments, first and second rectifier legs may be configured as an Active Neutral Point Clamped (ANPC) topology.

In some embodiments, the mid-point of the sixth and seventh switch of the third rectifier leg is coupled to the neutral line via the reconfiguration switch in on-state during single-phase operation. Thus, the midpoint of the sixth and seventh switch of the third rectifier leg may be connected to the neutral line through the reconfiguration switch when it is in the on-state during single-phase operation.

In some embodiments, the apparatus further comprises a DC stage coupled to the rectifier stage. The DC stage comprises a DC-DC converter. A DC-DC converter is an electronic device that converts a source of direct current (DC) from one voltage level to another. DC-DC converters can either step up (boost) or step down (buck) the input voltage, depending on the requirements of the application.

In some embodiments, the DC stage further comprises a filter circuit configured to reduce current ripple in the DC signal. This means the filter may smooth out fluctuations in the current, resulting in a more stable and consistent DC output. This may improve reliability and performance of devices powered by the DC signal, reducing wear on components and enhancing overall efficiency.

In some embodiments, the apparatus further comprises a control unit configured to control the reconfiguration switch between single-phase and three-phase operation based on a detected number of AC signal phases. This means the system can automatically adapt to different power supply conditions, thus ensuring optimal performance and efficiency by dynamically adjusting to the available power source.

According to a further aspect, the present disclosure proposes an On-Board Charger (OBC) for an electric vehicle comprising the apparatus of any one of the previous examples. An On-Board Charger (OBC) for an electric vehicle is a device installed within the vehicle that converts alternating current (AC) from external charging stations or household outlets into direct current (DC) to charge the vehicle's battery. This internal charger allows electric vehicles to be charged using various AC power sources, making charging more convenient and accessible.

In some embodiments, the OBC is a non-isolated OBC. A non-isolated OBC for an electric vehicle is a type of charger that does not include a galvanic isolation barrier between the input (AC source) and the output (DC charging to the battery). In simpler terms, there is a direct electrical connection between the AC input and the DC output, without the use of a transformer or other isolation methods to separate the two sides.

The present disclosure proposes an asymmetric bi-directional rectifier architecture with leg reconfiguration for multi-phase operation. The rectifier stage includes rectifier legs with different topologies - at least one with a neutral-point connected topology and at least another with a flying capacitor topology. This combination may allow for efficient handling of power conversion tasks. The rectifier stage can convert AC to DC and vice versa, making it suitable for applications requiring both rectification and inversion, such as in electric vehicle chargers. The rectifier stage is equipped with a reconfiguration switch that enables the system to switch between single-phase and three-phase operation. This flexibility allows the apparatus to adapt to different power supply conditions, enhancing its versatility and efficiency. A control circuit may manage the switching frequency and duty cycle of the rectifier leg switches. It may enable synchronized (but phase-shifted, e.g., by 120°) operation during three-phase mode and may optimize performance by adjusting the switching frequency during single-phase mode. By combining different rectifier topologies and using a control system, the disclosure aims to improve the efficiency, voltage regulation, and stability of the power conversion process. The present disclosure proposes a power converter designed to handle both single-phase and three-phase inputs efficiently with reduced ripple. It features an asymmetric rectifier architecture with a reconfiguration switch for adaptable operation and a control circuit for optimizing performance. This design may improve power conversion efficiency, voltage regulation, and overall system stability, making it particularly suitable for applications like electric vehicle on-board chargers.

### Brief description of the Figures

Some examples of apparatuses and/or methods will be described in the following by way of example only, and with reference to the accompanying figures, in which
- Fig. 1: shows an embodiment of a rectifier/inverter stage of a non-isolated OBC;
- Fig. 2A-G: show example configurations of rectifier legs;
- Fig. 3A: shows the rectifier/inverter stage of Fig. 1 in three-phase operation;
- Fig. 3B: shows the rectifier/inverter stage of Fig. 1 in single-phase operation;
- Fig. 4A: shows a simulation of a proposed asymmetric rectifier in three-phase operation; and
- Fig. 4B: shows a simulation of a proposed asymmetric rectifier in single-phase operation.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Some embodiments of the present disclosure relate the field of non-isolated On-Board Chargers (OBC). Power density and efficiency are key features for OBCs. Actual trends are towards power densities above 6kW/l and overall efficiency above 98%. Typical OBC specifications, however, are also beginning to require compatibility with single-phase operation since a three-phase grid might not be always available, especially when charging at home or depending on the country in which an electric vehicle (EV) is located. Hence, it may be valuable to design a universal OBC that is compatible with both single- and three-phase grids for worldwide use. In addition, non-isolated OBCs require a careful design and operation of the system in order to avoid leakage- currents through the parasitic capacitances between high-voltage (HV) battery positive and negative poles with respect to ground (PE), which are limited by regulation to a few mA.

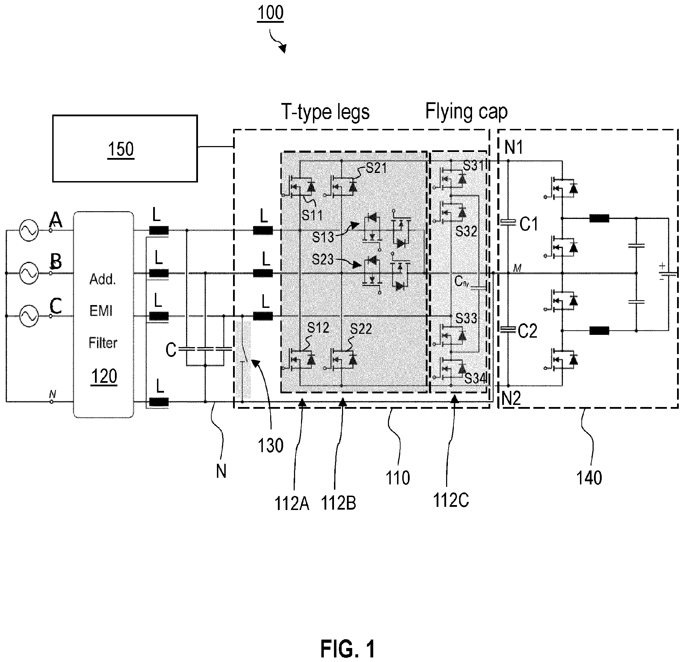

The present disclosure proposes a novel asymmetric hardware architecture for the rectifier/inverter stage of the battery charger which is compatible with both three-phase and with single phase grids. An embodiment of a rectifier/inverter stage 110 of a non-isolated OBC 100 is shown in **Fig. 1****.**

As can be seen from Fig. 1, OBC 100 is configured to handle a three-phase input comprising three phases, labeled as A, B, and C. As will become apparent in the sequel, OBC 100 is also configured to handle a single-phase input. Next to lines or paths for the phases A, B, C, OBC 100 also comprises a neutral line N which may serve as a common return path for current and may be used to balance voltage across the different phases A, B, and C.

OBC 100 comprises a rectifier stage 110 comprising the neutral line N and being configured to convert between an AC signal and a DC signal. Specifically, OBC 100 or its rectifier stage 110 may convert an incoming AC signal from a power supply into a DC signal to charge a vehicle's battery. This conversion may be essential for electric vehicles, as their batteries require DC power to charge, while most power sources provide AC power. Additionally, the OBC 100 may also perform the inverse operation in some cases, converting DC back to AC for specific applications.

Optionally, OBC 100 may comprise an EMI (Electromagnetic Interference) filter 120 between (one- or three-phase) AC input and rectifier stage 110. A purpose of the EMI filter 120 may be to reduce or eliminate electromagnetic noise and interference that may be generated by the power conversion process. This interference can affect the performance of the OBC 100 and other electronic systems in the vehicle or nearby devices. By filtering out these unwanted frequencies, the EMI filter 120 may ensure that the power supply to rectifier stage 110 is cleaner and that the OBC 100 operates more efficiently and reliably. EMI filter 120 may comprise inductors (chokes) L which may be used to block high-frequency noise while allowing low-frequency currents to pass through. Some inductors may be coupled, meaning they may share a common magnetic core. This may enhance the filtering capability by better attenuating common-mode noise (noise that appears equally on all phase lines A, B, C and the neutral line N). EMI filter 120 may further comprise capacitors C between lines or paths for the phases A, B, C and neutral line N, which may be used to shunt high-frequency noise to neutral line N, effectively filtering out these unwanted frequencies. Sometimes resistors may be included to dampen resonances and to provide a controlled impedance path, further enhancing the filter's performance.

In the illustrated embodiment, rectifier stage 110 comprises a first rectifier leg 112A with neutral-point connected topology, a second rectifier leg 112B with neutral-point connected topology, and a third rectifier leg 112C with flying capacitor topology. First rectifier leg 112A is associated with phase A. Second rectifier leg 112B is associated with phase B. Third rectifier leg 112C is associated with phase C. Thus, in the illustrated embodiment for multi-phase operation, the rectifier stage 110 includes three rectifier legs: the first rectifier leg 112A and the second rectifier leg 112B, both utilizing neutral-point connected topology, and the third rectifier leg 112C, which uses flying capacitor topology. Neutral-point connected topology involves connecting the midpoint of two series-connected switches to a neutral line. This configuration may help balance the voltage across the switches and ensure efficient operation by reducing voltage stress on each component. It may be used to create a stable and balanced DC output from an AC input. Flying capacitor topology involves using a capacitor C_{fly} that dynamically connect between different points in the circuit to balance voltages. This may help to reduce voltage ripple and improve the efficiency of the power conversion process. The capacitor 'flys' or moves to different potential levels to assist in voltage regulation. The skilled person having benefit from the present disclosure will appreciate that also configurations with less than three (e.g., two) rectifier legs are conceivable, where one rectifier leg utilizes neutral-point connected topology, while the other rectifier leg utilizes flying capacitor topology. This may depend on the specific requirements of the power conversion process, including the type of AC input (single-phase or three-phase), desired performance, cost constraints, and space or weight considerations.

Rectifier stage 110 comprises a first output node N1 and a second output node N2 for the DC signal. First rectifier leg 112A comprises a first switch S11 and a second switch S12 connected in series between the first output node N1 and the second output node N2. A midpoint of the first switch S11 and the second switch S12 of the first rectifier leg 112A is coupled to the neutral line N via a third (bidirectional) switch S13. That is, third (bidirectional) switch S13 couples the mid-point of the first switch S11 and the second switch S12 of the first rectifier leg 112A to neutral line N. Switch S13 or S23 may be made either with one monolithic device or with two antiseries MOSFETs, for example.

Second rectifier leg 112B comprises a first switch S21 and a second switch S22 connected in series between the first output node N1 and the second output node N2. A mid-point of the first switch S21 and the second switch S22 of the second rectifier leg 112B is coupled to the neutral line N via a third (bidirectional) switch S23. That is, third (bidirectional) switch S23 couples the mid-point of the first switch S21 and the second switch S22 of the second rectifier leg 112B to neutral line N.

The third rectifier leg 112C comprises a first switch S31, a second switch S32, a third switch S33, and a fourth switch S34 connected in series between the first output node N1 and the second output node N2. A mid-point of the first switch S31 and the second switch S32 of the third rectifier leg 112C is coupled to a mid-point of the third switch S33 and the fourth switch S34 of the third rectifier leg 112C via flying capacitor C_{fly}. A mid-point of the second switch S32 and the third switch S33 of the third rectifier leg 112C is coupled to an input of the third phase C via optional EMI filter 120.

Implementation options for the switches in the rectifier legs 112A, 112B, 112C can vary based on the specific requirements of the system, such as voltage, current, switching speed, and efficiency. One option is MOSFETs (Metal-Oxide-Semiconductor Field-Effect Transistors), which may offer fast switching speeds, high efficiency, and good performance at lower voltages. MOSFETs may be well-suited for applications requiring high switching frequencies and lower voltage levels, such as consumer electronics and low-power applications. Another option is IGBTs (Insulated-Gate Bipolar Transistors), which can handle higher voltages and currents than MOSFETs, provide good efficiency, and may offer robust performance. IGBTs may be suitable for high-power applications such as industrial motor drives, electric vehicle powertrains, and other high-voltage, high-current scenarios. Silicon Carbide (SiC) MOSFETs are also an option, providing higher efficiency, the ability to operate at higher temperatures, higher voltage and current capabilities, and faster switching speeds compared to traditional silicon MOSFETs and IGBTs. SiC MOSFETs may be suited for high-efficiency, high-power applications such as renewable energy systems, electric vehicle chargers, and high-performance industrial equipment. Gallium Nitride (GaN) transistors are another choice, offering very fast switching speeds, high efficiency, and the ability to handle high voltages. GaN transistors may be suitable for high-frequency applications and systems requiring very efficient power conversion, such as advanced power supplies and RF amplifiers. Bipolar Junction Transistors (BJTs) are another option, providing good performance at high current levels and relatively simple control.

When implementing the switches, several considerations may be taken into account. Faster switching speeds can reduce losses but may require more sophisticated control and cooling solutions. The chosen switch should be able to handle the maximum voltage and current expected in the application. High-power switches generate significant heat, so adequate cooling and thermal management are essential. Some switches, like IGBTs and SiC MOSFETs, may require more complex gate drivers and control circuits. Finally, while newer technologies like SiC and GaN can be more expensive than traditional silicon-based switches, they may offer performance benefits that may justify the cost in certain applications.

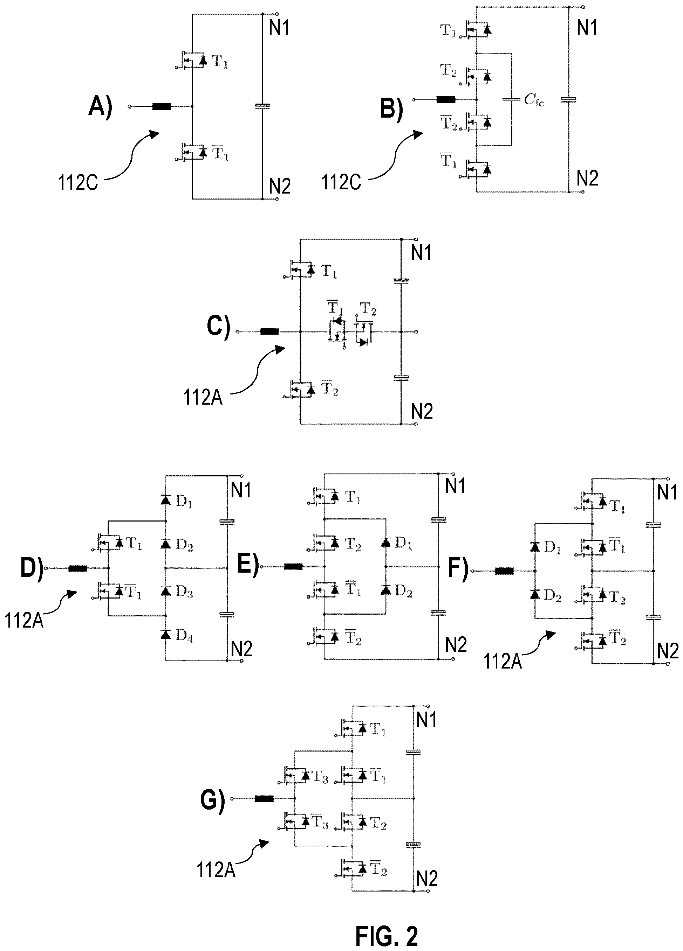

**Fig. 2A** shows an alternative embodiment of the third rectifier leg 112C using two switches T1 and *̅T̅*̅1̅ connected in series between the first output node N1 and the second output node N2. Both switches T1 and *̅T̅*̅1̅ may have a duty cycle of 50% and may be switched phase-shifted by 180°. This configuration represents a basic rectifier leg setup with 2-level half-bridge topology. The switches T1 operate to control the rectification process by switching on and off to convert AC to DC.

**Fig. 2B** shows an embodiment of the third rectifier leg 112C using four switches T1, T2, *̅T̅*̅2̅, and *̅T̅*̅1̅ connected in a more complex arrangement with an additional flying capacitor C_{fc} placed between the midpoint of two pairs of switches. The switches T1 and *̅T̅*̅1̅ (T2 and *̅T̅*̅2̅) may each have a duty cycle of 50% and may be switched phase-shifted by 180°. The switches T1 and T2 (*̅T̅*̅1̅ and *̅T̅*̅2̅) may be switched in phase. Fig. 2B essentially corresponds to the setup of the third rectifier leg 112C shown in Fig. 1.

**Fig. 2C** shows an embodiment of the first (or second) rectifier leg 112A with a T-type topology. Fig. 2C essentially corresponds to the setup of the first rectifier leg 112A shown in Fig. 1. During operation, the switches T1, T2, *̅T̅*̅2̅, and *̅T̅*̅1̅ may be controlled to alternate between conducting and non-conducting states. This allows the rectifier to convert AC input into DC output (across N1 and N2).

**Fig. 2D** shows an embodiment of the first (or second) rectifier leg 112A with NPC (Neutral Point Clamped) topology. Here, four diodes D1 to D4 are connected in series between output nodes N1 and N2. A mid-point between diodes D1 and D2 is connected to a first terminal of first switch T1, while the second terminal of first switch T1 is connected to the AC input (e.g., of phase A). A mid-point between diodes D3 and D4 is connected to a first terminal of second switch *̅T̅*̅1̅, while the second terminal of second switch *̅T̅*̅1̅ is connected to the AC input (e.g., of phase A). The mid-point between diodes D2 and D3 would be connected to neutral line N in the embodiment of Fig. 1.

**Fig. 2E** shows another embodiment of the first (or second) rectifier leg 112A with NPC topology. Here, four switches T1, T2, *̅T̅*̅1̅, and *̅T̅*̅2̅ are connected in series between output nodes N1 and N2. A mid-point between switches T1, T2 is connected to a first terminal of first diode D1, while the second terminal of first diode D1 would be connected to neutral line N in the embodiment of Fig. 1. A mid-point between switches *̅T̅*̅1̅ and *̅T̅*̅2̅ is connected to a first terminal of second diode D2, while the second terminal of second diode D2 would be connected to neutral line N in the embodiment of Fig. 1. The mid-point between switches T1, *̅T̅*̅1̅ is connected to the AC input (e.g., of phase A).

**Fig. 2F** shows yet another embodiment of the first (or second) rectifier leg 112A with NPC topology. Here, four switches T1, T2, *̅T̅*̅1̅, and *̅T̅*̅2̅ are connected in series between output nodes N1 and N2. A mid-point between switches T1, T2 is connected to a first terminal of first diode D1, while the second terminal of first diode D1is connected to the AC input (e.g., of phase A). A mid-point between switches *̅T̅*̅1̅ and *̅T̅*̅2̅ is connected to a first terminal of second diode D2, while the second terminal of second diode D2 is connected to the AC input (e.g., of phase A). The mid-point between switches T2 and *̅T̅*̅1̅, would be connected to neutral line N in the embodiment of Fig. 1.

**Fig. 2G** shows an yet another embodiment of the first (or second) rectifier leg 112A with Active Neutral Point Clamped (ANPC) topology. The structure resembles the NPC topology of Fig. 2D, while the diodes D1 - D4 are replaced by switches T1, *̅T̅*̅1̅, T2, and *̅T̅*̅2̅.

Referring back to Fig. 1, for multi-phase operation, rectifier stage 110 also comprises a reconfiguration switch 130 which is configured to switch between single-phase and three-phase operation of the OBC 110 or rectifier stage 110. In the illustrated example, reconfiguration switch 130 is arranged between the third phase input (C) of rectifier stage 110 and neutral line N.

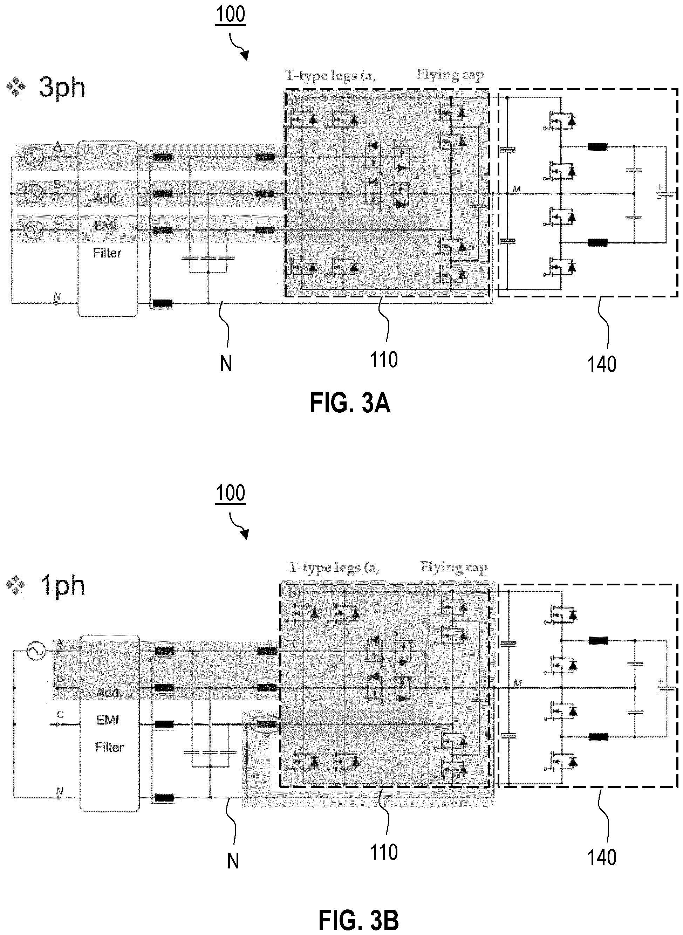

During three-phase operation (see **Fig. 3A**), reconfiguration switch 130 may be in open-state (OFF-state), meaning it does not connect the third phase input (C) to the neutral line N. In this state, the rectifier stage 110 operates normally with all three phases A, B, and C.

During single-phase operation (see **Fig. 3B**), reconfiguration switch 130 may be in closed-state (ON-state), thereby coupling (switches S13 and S23 of) the first and second rectifier legs 112A, 112B to the mid-point of second switch S32 and third switch S33 of third rectifier leg 112C. This configuration may help to manage the voltage and ensure stable operation during single-phase input by effectively utilizing the flying capacitor topology in the third rectifier leg.

If a single-phase input voltage is connected to both phases A and B, but not to phase C during single-phase operation, the reconfiguration switch 130 being in the closed-state (ON-state) connects the third phase input (C) to the neutral line (N). This effectively means phase C is not actively used for input voltage. In this configuration the single-phase input voltage may be applied to both phases A and B. The reconfiguration switch 130 connects the third phase input of third rectifier leg 112C to the neutral line, thereby coupling the rectifier legs 112A, 112B with neutral-point connected topology to the rectifier leg 112C with flying capacitor topology. This may help that any potential differences and voltage imbalances are managed. By coupling (the switches S13 and S23 of) the first and second rectifier legs 112A and 112B to the midpoint of the second switch S32 and the third switch S33 of the third rectifier leg 112C, the circuit utilizes the flying capacitor topology to balance the voltages. This may help stabilize the overall voltage levels and ensure that the rectifier stage 110 can operate efficiently with the available single-phase input (A and B), even though phase C is not actively receiving input voltage.

During three-phase operation, reconfiguration switch 130 may configure all rectifier legs 112A, 112B, and 112C for inverter/rectifier operation. During three-phase operation, the first and second rectifier legs 112A, 112B with neutral-point connected topology connect to the neutral line N, while the third rectifier leg 112C with flying capacitor topology does not connect to the neutral line N.

During single-phase operation, reconfiguration switch 130 may configure the first and second rectifier legs 112A, 112B with neutral-point connected topology for inverter/rectifier operation. This means that rectifier legs 112A, 112B are set up to convert the AC input to a DC output or vice versa, depending on the mode of operation (rectification or inversion). In this configuration, the first rectifier leg 112A, which uses neutral-point connected topology, connects to the neutral line N. This connection involves the midpoint of the series-connected switches S11 and S12 being coupled to the neutral line N via the third bidirectional switch S13. The second rectifier leg 112B, also using neutral-point connected topology, similarly connects to the neutral line N. This connection involves the midpoint of the series-connected switches S21 and S22 being coupled to the neutral line via the third bidirectional switch S23. The third rectifier leg 112C, which uses flying capacitor topology, does not connect to the neutral line N during three-phase operation. This leg operates independently, utilizing the flying capacitor (C_{fly}) to balance voltages and enhance performance without needing a connection to the neutral line N.

During single-phase operation, reconfiguration switch 130 may configure the third rectifier leg 112C with flying capacitor topology to connect to the neutral line N causing the third rectifier leg 112C to function as a voltage balancer. In this setup, the reconfiguration switch 130, in the closed-state (ON-state), connects the midpoint of the second switch S32 and the third switch S33 of the third rectifier leg 112C to the neutral line N and thus to both first and second rectifier legs 112A, 112B. This connection allows the flying capacitor (Cfly) in the third rectifier leg 112C to dynamically balance the voltages between the phases and the neutral line. By functioning as a voltage balancer, the third rectifier leg 112C helps to manage voltage variations and maintain stable operation during single-phase input.

As can be seen in Fig. 1, OBC 100 further comprises a DC stage 140 coupled to the rectifier stage 110 via output nodes N1, N2. Rectifier stage 110 converts the AC input (from phases A, B, and C) to a DC output. The output nodes N1 and N2 of the rectifier stage 110 provide the DC signal. DC stage 140 is connected to these output nodes N1 and N2, receiving the DC signal from the rectifier stage. DC stage 140 may regulate the DC signal to a level suitable for charging the vehicle's battery. DC stage 140 may include capacitors for energy storage, providing a buffer to handle transient loads and improve the overall efficiency and stability of the power system. DC stage 140 may include a DC-DC converter to step up or step down the DC signal to the required level for different subsystems within the vehicle, ensuring that all components receive the appropriate power levels. DC stage 140 may include components such as capacitors and inductors to filter out any remaining ripple or noise from the DC signal, ensuring a smooth and stable DC output.

In the example of Fig. 1, DC stage 140 comprises a first capacitor C1 and a second capacitor C2 connected in series between the first and the second output nodes N1, N2. The skilled person having benefit from the present disclosure will appreciate that also other configurations of DC stage 140 are possible (e.g., a single capacitor between the first and the second output nodes N1, N2).

In the example of Fig. 1, reconfiguration switch 130 is configured to, during single-phase operation, configure the rectifier leg 112C with flying capacitor topology to connect to a midpoint M of the first capacitor C1 and second capacitor C2. In particular, reconfiguration switch 130 may couple the mid-point of second switch S32 and third switch S33 of third rectifier leg 112C to a mid-point M of the first capacitor C1 and second capacitor C2 (and to the first and second rectifier legs 112A and 112B).

During three-phase operation, reconfiguration switch 130 may configure the rectifier leg 112C with flying capacitor topology to disconnect from the mid-point M of the first and second capacitor. In particular, reconfiguration switch 130 may disconnect the mid-point of second switch S32 and third switch S33 of third rectifier leg 112C from the mid-point M of the first capacitor C1 and second capacitor C2 (and from the first and second rectifier legs 112A and 112B).

OBC 100 or rectifier stage 110 may further comprise a control circuit 150 which is configured to control a switching frequency and duty cycle of the switches of the rectifier legs 112A, 112B, and 112C. During three-phase operation, control circuit 150 may be configured to control the switching frequency of switches of the rectifier legs 112A, 112B, and 112C to be the same. During single-phase operation, control circuit 150 may be configured to control the switching frequency of switches of the third rectifier leg 112C with flying capacitor topology to be different from switches the first and second rectifier legs 112A, 112B with neutral-point connected topology. During single-phase operation, control circuit 150 may be configured to control the switching frequency of switches of the third rectifier leg 112C to be higher than of switches the first and second rectifier legs 112A, 112B. For example, the control circuit 150 may be configured to control the switching frequency of switches of the third rectifier leg 112C with flying capacitor topology to be in a range of 40 - 100 kHz during single-phase operation. Thus, control circuit 150 may be configured to synchronize switching frequencies during three-phase operation and to optimize performance by setting a higher switching frequency for the third rectifier leg 112C during single-phase operation.

The duty cycle refers to the proportion of time that a switch is in the "on" state during a switching period. It is a parameter in controlling the operation of power converters, including rectifiers in an On-Board Charger (OBC). The control circuit 150 may manage the duty cycles to optimize the performance and efficiency of the rectifier legs. During three-phase operation, the duty cycles of the switches in the rectifier legs 112A, 112B, and 112C may be controlled to be synchronized. This means that each switch is turned on and off for the same proportion of time across all three phases. Synchronized duty cycles may maintain a balanced load and consistent power conversion, which is critical for efficient operation. In single-phase operation, the control circuit 150 might adjust the duty cycles differently for each rectifier leg, particularly for the third rectifier leg 112C with flying capacitor topology.

Control unit 150 may also be configured to control the reconfiguration switch 130 between single-phase and three-phase operation based on a detected number of AC signal phases. For example, in single-phase operation, the control unit 150 may detect only one phase (e.g., phase A) is active. It may send a signal to the reconfiguration switch 130, closing the switch (ON-state) and connecting phase C (i.e., the mid-point of second switch S32 and third switch S33 of third rectifier leg 112C) to the neutral line B. This configuration may ensure the rectifier stage 110 can operate efficiently with a single-phase input. In three-phase operation, control unit 150 may detect that phases A, B, and C are all active. It may send a signal to the reconfiguration switch 130, opening the switch (OFF-state) and disconnecting phase C (i.e., the mid-point of second switch S32 and third switch S33 of third rectifier leg 112C) from the neutral line N. This configuration ensures the rectifier stage operates efficiently with a three-phase input.

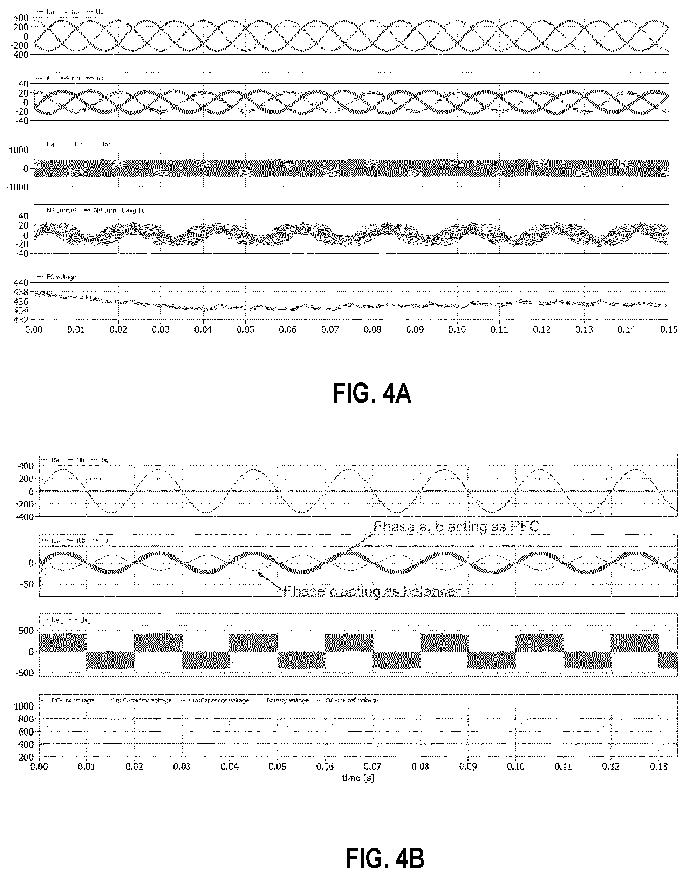

In balanced three-phase operation, there is not much difference compared to standard symmetric three-phase topologies, as confirmed by the simulation of **Fig. 4A****.** The reconfiguration switch 130 is OFF in this condition. A neutral point current in three-phase operation experiences a trade-off between a full NPC topology (worst case) and a full-flying capacitor topology (best case). In the proposed asymmetric topology the neutral point current rms value is reduced by 1/3 compared to the full NPC rectifier scenario. In the case that the inductance value L is kept the same for all the three-phases, the current ripple for iLc is lower in the flying capacitor leg 112C thanks to the double frequency factor of this topology.

In single-phase operation the first two legs 112A, 112B are used for power factor correction or inverter operation, while the third leg 112C is configured to operate as a "balancer". The reconfiguration switch 130 has to be switched ON, so the inductor L of the third leg 112C is connected to the neutral line N / mid-point M of the DC-link split capacitors C1, C2.

There are three main advantages of having such an asymmetric structure in single phase operation. The balancer may be working with 50% duty cycle since it has only to re-balance the line frequency current component in the DC-link split capacitors C1, C2. This operating condition is a sweet spot for the flying capacitor topology due to almost zero current ripple at 50% duty cycle. This allows to reduce the switching frequency of the balancer without affecting the current ripple and thus lowering the losses.

With neutral-point connected rectifiers 112a, 112B, working in single-phase, the DC-link voltage balancer 112C has to process less current compared with the non-neutral-point connected topologies, such as standard two-level B6 or flying capacitor. While for neutral-point connected topologies part of balancing current is provided already by the PFC half-bridge (Imid) thus reducing the current requirement of the balancer (IL=ln-lmid). This allows to avoid oversizing of the third leg in term of semiconductor and magnetic content.

Since the DC-voltage balancer is re-using one PFC (Power Factor Correction) leg, it can also take advantage of the current sensor of this leg for implementing balancer closed loop control without any extra HW. Controlling the balancer current allows to operate in single phase delivering 2/3 of the three-phase rated power without increasing the current stress or any overdesign of components and sharing the remaining current with the DC-link split capacitors. In other words, the control of the current delivered by the balancer may facilitate a trade-off between balancer and capacitors current requirements.

**Fig. 4B** presents the simulation of the proposed asymmetric rectifier 110 in single-phase operation. The DC-link voltage is controlled to 800V. The first two legs 112A, 112B (a, b in Fig. 4B) of the PFC are regulating the phase current (divided equally among the two legs 112A, 112B) to deliver the required power to the load and preserving the input power factor. The third leg 112C (c in Fig. 4B) is acting as a DC-link voltage balancer and it is 180° phase shifted compared to the input current. The current ripple of the balancer is almost negligible due to the 50% duty operation in the flying capacitor topology.

In case of more power to be processed in single-phase, e.g. with the US grid, an external balancer can also be coupled together the internal one (third phase reconfiguration). Since the RMS current of the internal balancer 112C can be controlled, there is no need for a current sensor in the external balancer in order to guarantee an equal current sharing among the two balancers.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processorexecutable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100), comprising
a rectifier stage (110) having a neutral line (N) and configured to convert between
an AC signal and a DC signal, the rectifier stage (110) comprising
at least one rectifier leg (112A) with neutral-point connected topology;
at least one rectifier leg (112C) with flying capacitor topology;
a reconfiguration switch (130) configured to switch between single-phase and three-phase operation of the rectifier stage (110).

2. The apparatus (100) of claim 1, wherein the rectifier leg (112C) with flying capacitor topology is configured as a two- or three-level flying capacitor half-bridge circuit.

3. The apparatus (100) of any one of the previous claims, wherein the rectifier leg (112A) with neutral-point connected topology comprises one of a T-type half-bridge circuit, a neutral point clamped, NPC, half-bridge circuit, or an active neutral point clamped, ANPC, half-bridge circuit.

4. The apparatus (100) of any one of the previous claims, further comprising a control circuit (150) configured to control a switching frequency and duty cycle of switches of the rectifier legs (112A; 112C), wherein the control circuit (150) is configured to during three-phase operation
control the switching frequency of switches of the rectifier legs (112A; 112C) to be the same; and
during single-phase operation,
control the switching frequency of switches of the rectifier leg (112C) with flying capacitor topology to be different from switches the rectifier leg (112A) with neutral-point connected topology.

5. The apparatus (100) of claim 4, wherein the control circuit (150) is configured to control the switching frequency of switches of the rectifier leg (112C) with flying capacitor topology to be in a range of 40 - 100 kHz during single-phase operation.

6. The apparatus (100) of any one of the previous claims, wherein the reconfiguration switch (130) is configured to,
during three-phase operation,
configure the rectifier legs (112A; 112C) for inverter/rectifier operation,
wherein the rectifier leg (112A) with neutral-point connected topology connects to the neutral line, and the rectifier leg (112C) with flying capacitor topology does not connect to the neutral line;
during single-phase operation,
configure the rectifier leg (112A) with neutral-point connected topology for inverter/rectifier operation, and
configure the rectifier leg (112C) with flying capacitor topology to connect to the neutral line causing the rectifier leg (112C) with flying capacitor topology to function as a voltage balancer.

7. The apparatus (100) of any one of the previous claims, wherein the rectifier stage (110) comprises a first output node and a second output node for the DC signal, wherein the apparatus (100) further comprises a DC stage (140) coupled to the rectifier stage (110), the DC stage (140) comprising a first capacitor and a second capacitor connected in series between the first and the second output node,
wherein the reconfiguration switch (130) is configured to,
during single-phase operation,
configure the rectifier leg (112C) with flying capacitor topology to connect to a mid-point of the first and second capacitor, and
during three-phase operation,
configure the rectifier leg (112C) with flying capacitor topology to disconnect from the mid-point of the first and second capacitor.

8. The apparatus (100) of any one of the previous claims, wherein the rectifier stage (110) comprises
a first rectifier leg (112A) with neutral-point connected topology;
a second rectifier leg (112B) with neutral-point connected topology;
a third rectifier leg (112C) with flying capacitor topology;
a first output node and a second output node for the DC signal, wherein the first rectifier leg (112A) comprises
a first switch and a second switch connected in series between the first and the second output node, wherein a mid-point of the first and second switch of the first rectifier leg is coupled to a neutral line during single- and three-phase operation;
wherein the second rectifier leg (112B) comprises
a third switch and a fourth switch connected in series between the first and the second output node, wherein a mid-point of the third and fourth switch of the second rectifier leg is coupled to the neutral line during single- and three-phase operation;
wherein the third rectifier leg (112C) comprises
a fifth, sixth, seventh, and eighth switch connected in series between the first and the second output node, wherein a mid-point of the fifth and sixth switch of the third rectifier leg is coupled to a mid-point of the seventh and eighth switch of the third rectifier leg via a flying capacitor, and wherein a mid-point of the sixth and seventh switch of the third rectifier leg is coupled to the neutral line during single-phase operation.

9. The apparatus (100) of claim 8, wherein
the mid-point of the first and second switch of the first rectifier leg (112A) is coupled to the neutral line via a first bidirectional switch;
the mid-point of the third and fourth switch of the second rectifier leg (112B) is coupled to the neutral line via a second bidirectional switch.

10. The apparatus (100) of claim 8 or 9, wherein the mid-point of the sixth and seventh switch of the third rectifier leg (112C) is coupled to the neutral line via the reconfiguration switch (130) in on-state during single-phase operation.

11. The apparatus (100) of any one of the previous claims, further comprising a DC stage (140) coupled to the rectifier stage (110), the DC stage (140) comprising a DC-DC converter.

12. The apparatus (100) of claim 11, the DC stage (140) further comprising a filter circuit configured to reduce current ripple in the DC signal.

13. The apparatus (100) of any one of the previous claims, further comprising a control unit (150) configured to control the reconfiguration switch (130) between single-phase and three-phase operation based on a detected number of AC signal phases.

14. An On-Board Charger, OBC (100), for an electric vehicle comprising the apparatus of any one of the previous claims.

15. The OBC of claim 14, wherein the OBC (100) is a non-isolated OBC.

## Amended claims

### Amended claims in accordance with Rule 137(2) EPC.

1. An apparatus (100), comprising
a rectifier stage (110) having a neutral line (N) and configured to convert between an AC signal and a DC signal, the rectifier stage (110) comprising
at least one rectifier leg (112A) with neutral-point connected topology;
at least one rectifier leg (112C) with flying capacitor topology;
a reconfiguration switch (130) configured to switch between single-phase and three-phase operation of the rectifier stage (110),
wherein the reconfiguration switch (130) is configured to,
during three-phase operation,
configure the rectifier legs (112A; 112C) for inverter/rectifier operation,
wherein the rectifier leg (112A) with neutral-point connected topology connects to the neutral line, and the rectifier leg (112C) with flying capacitor topology does not connect to the neutral line; and
during single-phase operation,
configure the rectifier leg (112A) with neutral-point connected topology for inverter/rectifier operation, and
configure the rectifier leg (112C) with flying capacitor topology to connect to the neutral line causing the rectifier leg (112C) with flying capacitor topology to function as a voltage balancer.

2. The apparatus (100) of claim 1, wherein the rectifier leg (112C) with flying capacitor topology is configured as a two- or three-level flying capacitor half-bridge circuit, wherein the two-level flying capacitor half-bridge circuit comprises
two series-connected power switches (T1, *̅T̅*̅1̅) arranged between a first output node (N1) and a second output node (N2), and
a flying capacitor connected in parallel with the two power switches so that the rectifier leg (112C) provides two discrete output voltage levels.

3. The apparatus (100) of any one of the previous claims, wherein the rectifier leg (112A) with neutral-point connected topology comprises one of a T-type half-bridge circuit, a neutral point clamped, NPC, half-bridge circuit, or an active neutral point clamped, ANPC, half-bridge circuit.

4. The apparatus (100) of any one of the previous claims, further comprising a control circuit (150) configured to control a switching frequency and duty cycle of switches of the rectifier legs (112A; 112C), wherein the control circuit (150) is configured to during three-phase operation
control the switching frequency of switches of the rectifier legs (112A; 112C) to be the same; and
during single-phase operation,
control the switching frequency of switches of the rectifier leg (112C) with flying capacitor topology to be different from switches the rectifier leg (112A) with neutral-point connected topology.

5. The apparatus (100) of claim 4, wherein the control circuit (150) is configured to control the switching frequency of switches of the rectifier leg (112C) with flying capacitor topology to be in a range of 40 - 100 kHz during single-phase operation.

6. The apparatus (100) of any one of the previous claims, wherein the rectifier stage (110) comprises a first output node and a second output node for the DC signal, wherein the apparatus (100) further comprises a DC stage (140) coupled to the rectifier stage (110), the DC stage (140) comprising a first capacitor and a second capacitor connected in series between the first and the second output node, wherein the reconfiguration switch (130) is configured to,
during single-phase operation,
configure the rectifier leg (112C) with flying capacitor topology to connect to a mid-point of the first and second capacitor, and
during three-phase operation,
configure the rectifier leg (112C) with flying capacitor topology to disconnect from the mid-point of the first and second capacitor.

7. The apparatus (100) of any one of the previous claims, wherein the rectifier stage (110) comprises
a first rectifier leg (112A) with neutral-point connected topology;
a second rectifier leg (112B) with neutral-point connected topology;
a third rectifier leg (112C) with flying capacitor topology;
a first output node and a second output node for the DC signal, wherein the first rectifier leg (112A) comprises
a first switch and a second switch connected in series between the first and the second output node, wherein a mid-point of the first and second switch of the first rectifier leg is coupled to a neutral line during single- and three-phase operation;
wherein the second rectifier leg (112B) comprises
a third switch and a fourth switch connected in series between the first and the second output node, wherein a mid-point of the third and fourth switch of the second rectifier leg is coupled to the neutral line during single- and three-phase operation;
wherein the third rectifier leg (112C) comprises
a fifth, sixth, seventh, and eighth switch connected in series between the first and the second output node, wherein a mid-point of the fifth and sixth switch of the third rectifier leg is coupled to a mid-point of the seventh and eighth switch of the third rectifier leg via a flying capacitor, and wherein a mid-point of the sixth and seventh switch of the third rectifier leg is coupled to the neutral line during single-phase operation.

8. The apparatus (100) of claim 7, wherein
the mid-point of the first and second switch of the first rectifier leg (112A) is coupled to the neutral line via a first bidirectional switch;
the mid-point of the third and fourth switch of the second rectifier leg (112B) is coupled to the neutral line via a second bidirectional switch.

9. The apparatus (100) of claim 7 or 8, wherein the mid-point of the sixth and seventh switch of the third rectifier leg (112C) is coupled to the neutral line via the reconfiguration switch (130) in on-state during single-phase operation.

10. The apparatus (100) of any one of the previous claims, further comprising a DC stage (140) coupled to the rectifier stage (110), the DC stage (140) comprising a DC-DC converter.

11. The apparatus (100) of claim 10, the DC stage (140) further comprising a filter circuit configured to reduce current ripple in the DC signal.

12. The apparatus (100) of any one of the previous claims, further comprising a control unit (150) configured to control the reconfiguration switch (130) between single-phase and three-phase operation based on a detected number of AC signal phases.

13. An On-Board Charger, OBC (100), for an electric vehicle comprising the apparatus of any one of the previous claims.

14. The OBC of claim 13, wherein the OBC (100) is a non-isolated OBC.
